Europäisches Patentamt

European Patent Office

Office européen des brevets

(19)

(11) **EP 0 512 596 B1**

(12) # EUROPEAN PATENT SPECIFICATION

(45) Date of publication and mention
of the grant of the patent:
**07.02.1996 Bulletin 1996/06**

(51) Int Cl.6: **F16H 61/02**
// F16H59/66, F16H59/14

(21) Application number: **92201067.3**

(22) Date of filing: **15.04.1992**

(54) **A method of shift pattern control for a motor vehicle automatic transmission**

Verfahren zum Regeln der Gangänderungskennlinien für das automatische Getriebe eines Kraftfahrzeuges

Méthode de commande du programme de changement de vitesse pour la boîte automatique d'un véhicule motorisé

(84) Designated Contracting States:
**DE FR GB IT**

(30) Priority: **06.05.1991 US 696424**

(43) Date of publication of application:
**11.11.1992 Bulletin 1992/46**

(73) Proprietors:
• **DELCO ELECTRONICS CORPORATION**
**Kokomo, Indiana 46902 (US)**
• **SATURN CORPORATION**
**Troy, Michigan 48007-7025 (US)**

(72) Inventors:
• **Nitz, Larry Theodore**
**Troy, Michigan 48098 (US)**

• **Witkowski, Michael Robert**
**Sterling Heights, Michigan 48310 (US)**
• **Bolander, William Joseph**
**Clarkston, Michigan 48016 (US)**
• **Milunas, Rimas Stasys**
**Royal Oak, Michigan 48073 (US)**

(74) Representative: **Denton, Michael John et al**
**Luton, Bedfordshire LU1 2SE (GB)**

(56) References cited:
**EP-A- 0 139 982        US-A- 4 354 236**

• **WORLD PATENTS INDEX LATEST week 9119 Derwent Publications Ltd., London, GB AN 91-138495 GRAY : ' Shift pattern modification based on operating conditions of vehicle - determining load as function of manifold and ambient temp. invariable displacement compressor'.**

## Description

This invention is directed to a method of shift pattern control for motor vehicle automatic shift transmissions, and more particularly, to such a method which is compensated for excessive vehicle loading.

Shifting in a motor vehicle automatic transmission having multiple speed ratios is generally initiated in response to the detection of predefined vehicle speed and engine load conditions, referred to collectively as a shift pattern. In a typical application, upshift and downshift vehicle speed thresholds are determined as a function of an engine load indicator, such as throttle position. An upshift to a higher output/input speed ratio is initiated if the actual vehicle speed exceeds the upshift threshold, while a downshift to a lower output/input speed ratio is initiated if the actual vehicle speed is lower than the downshift threshold.

The shift pattern data is empirically determined to achieve various fuel economy and performance requirements under "normal" road load conditions. In an electronic control application, the data is stored in a nonvolatile memory array for subsequent retrieval by a powertrain control processor. A drawback of this approach is that the shift pattern developed for "normal" road load may not be appropriate when the vehicle is operated under heavy load conditions. Thus, it is not unusual for several upshifts and downshifts to occur in the course of climbing a steep grade, or while climbing a modest grade with a trailer attached to the vehicle. The successive upshifting and downshifting is not only annoying, but also causes excessive wear and heating of the transmission friction elements.

EP-A-0139982 discloses the features of the pre-amble of claim 1 to calculate vehicle weight to approximate drive torque which in conjunction with actual torque indicates road gradient. Transitions in gradients are used to forestall shifting. US-A-4354236 requires the use of shift pattern modifications.

A method of operation in accordance with the present invention is characterised over EP-A-0139982 by the features specified in the characterising portion of claim 1.

The present invention is directed to an improved method of shift pattern control in which upshifting and downshifting are modified in response to a detected condition of above normal road load. The above normal loading may be due to a number of conditions such as trailering, steep grade climbing, unusual aerodynamic loading, or any combination thereof.

A load equation balancing the transmission output torque against the nominal road load (including acceleration torque, aerodynamic torque and rolling resistance torque) provides a continuous indication of the excess or above normal road load. The excess load, referred to herein as the grade load GL, is used to develop a hysteresis term for modifying the base shift pattern so as to provide earlier downshifting and later upshifting. When the grade load exceeds a reference corresponding to a relatively high load condition, upshifting is further delayed in relation to the ability of the powertrain to meet the detected grade road load in the upshifted speed ratio.

The present invention will now be described, by way of example, with reference to the accompanying drawings, in which:-

Figures 1a-1b schematically depict a computer-based, electronic, transmission control apparatus using a method according to this invention;
Figure 2a graphically depicts the shift scheduling technique normally employed by the control unit of Figure 1a;
Figure 2b graphically depicts the shift pattern modification of the present invention;
Figure 3 graphically depicts a torque ratio term employed by the method of this invention during heavy grade load conditions; and
Figures 4, 5a-5b and 6 depict flow diagrams executed by the control unit of Figure la in carrying out the control of this invention.

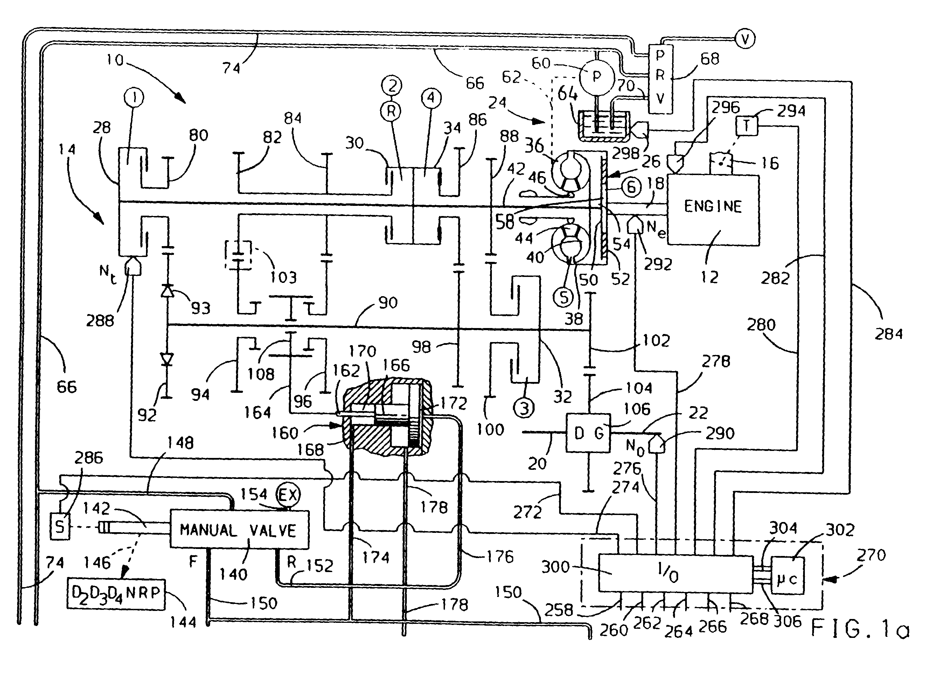

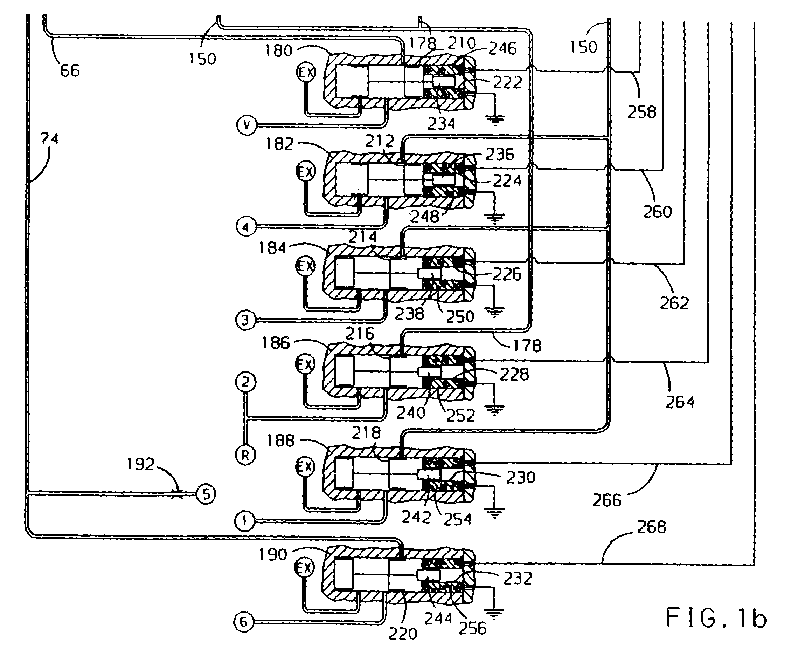

Referring particularly to Figures 1a and 1b, the reference numeral 10 generally designates a motor vehicle drivetrain including an engine 12 and a (parallel shaft) transmission 14 having a reverse speed ratio and four forward speed ratios. Engine 12 includes a throttle mechanism 16 mechanically connected to an operator manipulated device, such as an accelerator pedal (not shown) for regulating engine output torque, such torque being applied to the transmission 14 through the engine output shaft 18. The transmission 14 transmits engine output torque to a pair of drive axles 20 and 22 through a torque converter 24 and one or more of the (fluid operated) clutches 26 - 34, such clutches being applied or released according to a predetermined schedule for establishing the desired transmission speed ratio.

Referring now more particularly to the transmission 14, the impeller or input member 36 of the torque converter 24 is connected to be rotatably driven by the output shaft 18 of engine 12 through the input shell 38. The turbine or output member 40 of the torque converter 24 is rotatably driven by the impeller 36 by means of fluid transfer therebetween and is connected to rotatably drive a shaft 42. A stator 44 redirects the fluid which couples the impeller 36 to the turbine 40, the stator being connected through a one-way device 46 to the housing of transmission 14. The torque converter 24 also includes the clutch 26 comprising a clutch plate 50 secured to the shaft 42.

The clutch plate 50 has a friction surface 52 formed thereon adaptable to be engaged with the inner surface of the input shell 38 to form a direct mechanical drive between the engine output shaft 18 and the (transmission) shaft 42. The clutch plate 50 divides the space between input shell 38 and the turbine 40 into two fluid chambers: an apply chamber 54 and a release chamber 56. When the fluid pressure in the apply chamber 54 exceeds that in the release chamber 56, the friction surface 52 of clutch plate 50 is moved into engagement with the input shell 38 as shown in Figure 1, thereby engaging the clutch 26 to provide a mechanical drive connection in parallel with the torque converter 24.

In such case, there is no slippage between the impeller 36 and the turbine 40. When the fluid pressure in the release chamber 56 exceeds that in the apply chamber 54, the friction surface 52 of the clutch plate 50 is moved out of engagement with the input shell 38 thereby uncoupling such mechanical drive connection and permitting slippage between the impeller 36 and the turbine 40. The circled numeral 5 represents a fluid connection to the apply chamber 54 and the circled numeral 6 represents a fluid connection to the release chamber 56.

A (positive displacement hydraulic) pump 60 is mechanically driven by the engine output shaft 18 through the input shell 38 and impeller 36, as indicated by the broken line 62. Pump 60 receives hydraulic fluid at low pressure from a fluid reservoir 64 and supplies pressurized fluid to the transmission control elements via output line 66. A pressure regulator valve (PRV) 68 is connected to the pump output line 66 and serves to regulate the fluid pressure (hereinafter referred to as line pressure) in output line 66 by returning a controlled portion of the fluid therein to fluid reservoir 64 via the line 70. In addition, pressure regulator valve 68 supplies fluid pressure for the torque converter 24 via line 74. While the pump and pressure regulator valve designs are not critical to the present invention, a representative pump is disclosed in US Patent No. 4,342,545, and a representative pressure regulator valve is disclosed in US Patent No. 4,283,970.

The (transmission) shaft 42 and a further (transmission) shaft 90 each have a plurality of gear elements rotatably supported thereon. The gear elements 80 - 88 are supported on shaft 42 and the gear elements 92 - 102 are supported on shaft 90. The gear element 88 is rigidly connected to the shaft 42, and the gear elements 98 and 102 are rigidly connected to the shaft 90. Gear element 92 is connected to the shaft 90 via a freewheeler or one-way device 93. The gear elements 80, 84, 86 and 88 are maintained in meshing engagement with the gear elements 92, 96, 98 and 100, respectively, and the gear element 82 is coupled to the gear element 94 through a reverse idler gear 103. The shaft 90, in turn, is coupled to the drive axles 20 and 22 through gear elements 102 and 104 and a conventional differential gear set (DG) 106.

A dog clutch 108 is splined on the shaft 90 so as to be axially slidable thereon, and serves to rigidly connect the shaft 90 either to the gear element 96 (as shown) or the gear element 94. A forward speed relation between the gear element 84 and shaft 90 is established when dog clutch 108 connects the shaft 90 to gear element 96, and a reverse speed relation between the gear element 82 and shaft 90 is established when the dog clutch 108 connects the shaft 90 to the gear element 94.

The clutches 28 - 34 each comprise an input member rigidly connected to a (transmission) shaft 42 or 90, and an output member rigidly connected to one or more gear elements such that engagement of a clutch couples the respective gear element and shaft to effect a driving connection between the shafts 42 and 90. The clutch 28 couples the shaft 42 to the gear element 80; the cluth 30 couples the shaft 42 to the gear elements 82 and 84; the clutch 32 couples the shaft 90 to the gear element 100; and the clutch 34 couples the shaft 42 to the gear element 86. Each of the clutches 28 - 34 is biased toward a disengaged state by a return spring (not shown).

Engagement of the clutch is effected by supplying fluid pressure to an apply chamber thereof. The resulting torque capacity of the clutch is a function of the applied pressure less the return spring pressure, hereinafter referred to as the working pressure pressure. The circled numeral 1 represents a fluid passage for supplying pressurized fluid to the apply chamber of clutch 28; the circled numeral 2 and letter R represent a fluid passage for supplying pressurized fluid to the apply chamber of the clutch 30; the circled numeral 3 represents a fluid passage for supplying pressurized fluid to the apply chamber of the clutch 32; and the circled numeral 4 represents a fluid passage for directing pressurized fluid to the apply chamber of the clutch 34.

The various gear elements 80 - 88 and 92 - 100 are relatively sized such that engagement of first, second, third and fourth forward speed ratios are effected by engaging the clutches 28, 30, 32 and 34, respectively, it being understood that the dog clutch 108 must be in the position depicted in Figure 1 to obtain a forward speed ratio. A neutral speed ratio or an effective disconnection of the drive axles 20 and 22 from the engine output shaft 18 is effected by maintaining all of the clutches 28 - 34 in a released condition. The speed ratios defined by the various gear element pairs are generally characterized by the ratio of the turbine speed Nt to output speed No. Representative Nt/No ratios for transmission 14 are as follows:

| | |
|---|---|
| First - 2.368 | Second - 1.273 |
| Third - 0.808 | Fourth - 0.585 |
| Reverse - 1.880 | |

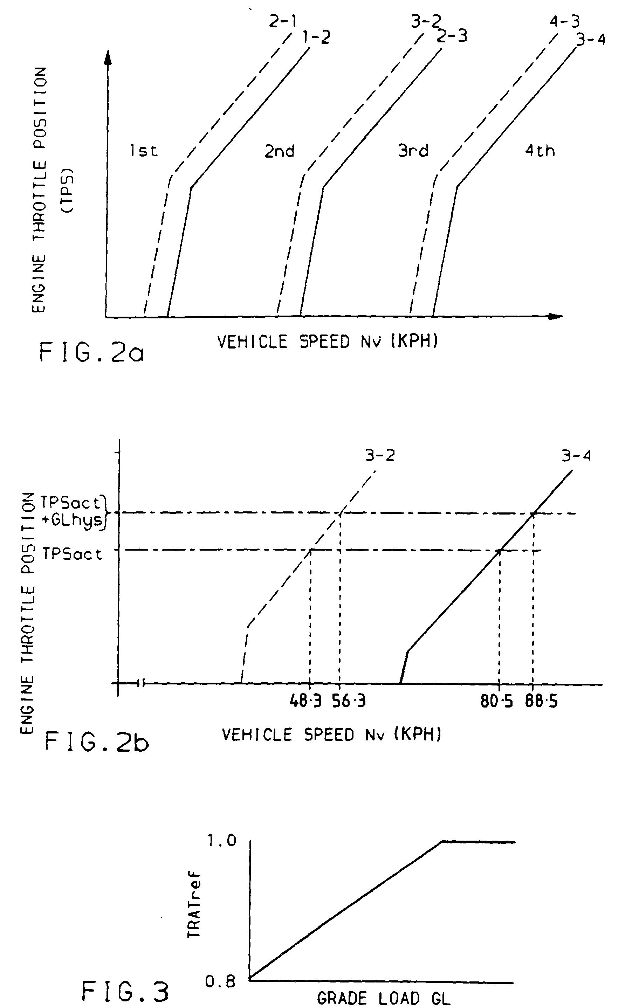

Shifting from a current forward speed ratio to a desired forward speed ratio requires that the clutch associated with the current speed ratio (off-going) be disengaged and the clutch associated with the desired speed ratio (on-coming) be engaged. For example, a shift from the first forward speed ratio to the second forward speed ratio involves disengagement of the clutch 28 and engagement of the clutch 30. As explained below, the shifting between the various speed ratios is initiated in response to the achievement of predefined load conditions represented by predefined combinations of vehicle speed and engine throttle position. Data corresponding to the predefined combinations of vehicle speed Nv and engine throttle position TPS are stored in a look-up table or similar data structure, as described below in reference to Figures 2a-2b, and measured values of vehicle speed and engine throttle position are compared to the stored data to determine the desired speed ratio. If the desired ratio is higher than the actual ratio, an upshift is initiated; if the desired ratio is lower than the actual ratio, a downshift is initiated. In any event, the shifting is carried out by a precise control of the fluid pressure supplied to the various clutches 28 - 34, as described for example, in US Patent Nos. 4,707,789 and 4,653,350.

The fluid control elements of the transmission 14 include a manual valve 140, a directional servo 160 and a plurality of (electrically operated) fluid valves 180 - 190. The manual valve 140 operates in response to operator demand and serves, in conjunction with directional servo 160, to direct regulated line pressure to the appropriate fluid valves 182 - 188. The fluid valves 182 - 188, in turn, are individually controlled to direct fluid pressure to the clutches 28 - 34. The fluid valve 180 is controlled to direct fluid pressure from the output line 66 to the pressure regulator valve 68, and the fluid valve 190 is controlled to direct fluid pressure from the line 74 to the clutch 26 of torque converter 24. The directional servo 160 operates in response to the condition of the manual valve 140 and serves to properly position the dog clutch 108.

The manual valve 140 includes a shaft 142 for receiving axial mechanical input from the operator of the motor vehicle in relation to the speed range the operator desires. The shaft 142 is also connected to an indicator mechanism 144 through a suitable mechanical linkage, as indicated generally by the broken line 146. Fluid pressure from the output line 66 is applied as an input to the manual valve 140 via a line 148 and the valve outputs include a forward (F) output line 150 for supplying fluid pressure for engaging forward speed ratios and a reverse (R) output line 152 for supplying fluid pressure for engaging the reverse speed ratio.

Thus, when the shaft 142 of manual valve 140 is moved to the D4, D3 or D2 positions shown on the indicator mechanism 144, line pressure from the line 148 is directed to the forward (F) output line 150. When the shaft 142 is in the R position shown on the indicator mechanism 144, line pressure from the line 148 is directed to the reverse (R) output line 152. When the shaft 142 of manual valve 140 is in the N (neutral) or P (park) positions, the line 148 is isolated, and the forward and reverse output lines 150 and 152 are connected to an exhaust line 154 which is adapted to return any fluid therein to the fluid reservoir 64.

The directional servo 160 is a fluid operated device and includes an output shaft 162 connected to a shift fork 164 for axially shifting the dog clutch 108 on shaft 90 to selectively enable either forward or reverse speed ratios. The output shaft 162 is connected to a piston 166 axially movable within the servo housing 168. The axial position of the piston 166 within the servo housing 168 is determined according to the fluid pressures supplied to chambers 170 and 172. The forward output line 150 of manual valve 140 is connected via line 174 to the chamber 170 and the reverse output line 152 of manual valve 140 is connected via line 176 to the chamber 172.

When the shaft 142 of the manual valve 140 is in a forward range position, the fluid pressure in the chamber 170 urges piston 166 rightward, as viewed in Figure 1, to engage the dog clutch 108 with the gear element 96 for enabling engagement of a forward speed ratio. When the shaft 142 of the manual valve 140 is moved to the R position, the fluid pressure in chamber 172 urges piston 166 leftward, as viewed in Figure 1, to engage the dog clutch 108 with the gear element 94 for enabling engagement of the reverse speed ratio. In each case, it will be remembered that the actual engagement of the second or reverse speed ratio is not effected until engagement of the clutch 30.

The directional servo 160 also operates as a fluid valve for enabling the reverse speed ratio. To this end, the directional servo 160 includes an output line 178 connected to the (electrically operated) fluid valve 186. When the operator selects a forward speed ratio and the piston 166 of directional servo 160 is in the position depicted in Figure 1, the passage between lines 176 and 178 is cut off; when the operator selects the reverse gear ratio, the passage between the lines 176 and 178 is open.

The (electrically operated) fluid valves 180 - 190 each receive fluid pressure at an input passage thereof from the pump 60, and are individually controlled to direct fluid pressure to the pressure regulator valve 68 or respective clutches 26 - 34. The fluid valve 180 receives line pressure directly from output line 66, and is controlled to direct a variable amount of such pressure to the pressure regulator valve 68, as indicated by the circled letter V. The fluid valves 182, 184 and 188 receive fluid pressure from the forward output line 150 of manual valve 140, and are controlled to direct variable amounts of such pressure to the clutches 34, 32 and 28, as indicated by the circled numerals 4, 3 and 1, respectively.

The fluid valve 186 receives fluid pressure from the forward output line 150 and the output line 178, and is controlled to direct a variable amount of such pressure to the clutch 30, as indicated by the circled numeral 2 and the circled letter R. The fluid valve 190 receives fluid pressure from line 74 of pressure regulator valve 68, and is controlled to direct a variable amount of such pressure to the release chamber 56 of the clutch 26, as indicated by the circled numeral 6. The apply chamber 54 of the clutch 26 is supplied with fluid pressure from the line 74 via an orifice 192, as indicated by the circled numeral 5.

Each of the fluid valves 180 - 190 includes a spool element 210 - 220, axially movable within the respective valve body for directing fluid flow between input and output passages. When a respective spool element 210 - 220 is in the rightmost position as viewed in Figure 1, the input and output passages are connected. Each of the fluid valves 180 - 190 includes an exhaust passage, as indicated by the circled letters EX, such passage serving to drain fluid from the respective clutch when the spool element is shifted to the leftmost position as viewed in Figure 1.

In Figure 1, the spool elements 210 and 212 of fluid valves 180 and 182 are shown in the rightmost position connecting the respective input and output lines, while the spool elements 214, 216, 218 and 220 of the fluid valves 184, 186, 188 and 190 are shown in the leftmost position connecting the respective output and exhaust lines. Each of the fluid valves 180 - 190 includes a solenoid 222 - 232 for controlling the position of its spool element 210 - 220. Each such solenoid 222 - 232 comprises a plunger 234 - 244 connected to the respective spool element 210 - 220 and a solenoid coil 246 - 256 surrounding the respective plunger.

One terminal of each such solenoid coil 246 - 256 is connected to ground potential as shown, and the other terminal is connected to an output line 258 - 268 of a control unit 270 which governs the solenoid coil energization. As set forth hereinafter, the control unit 270 pulse-width the solenoid coils 246 - 256 according to a predetermined control algorithm to regulate the fluid pressure supplied to the pressure regulator valve 68 and the clutches 26 - 34, the duty cycle of such modulation being determined in relation to the desired magnitude of the supplied pressures.

Input signals for the control unit 270 are provided on the input lines 272 - 284. A position sensor (S) 286 responsive to movement of the shaft 142 provides an input signal to the control unit 270 via line 272. Speed transducers 288, 290 and 292 sense the rotational velocity of various rotary members within the transmission 14 and supply speed signals in accordance therewith to the control unit 270 via lines 274, 276, and 278, respectively. The speed transducer 288 senses the velocity of the transmission shaft 42 and therefore the turbine or transmission input speed Nt; the speed transducer 290 senses the velocity of the drive axle 22 and therefore the transmission output speed No; and the speed transducer 292 senses the velocity of the engine output shaft 18 and therefore the engine speed Ne.

A position transducer (T) 294 is responsive to the position of the throttle mechanism 16 and provides an electrical signal in accordance therewith to control unit 270 via line 280. A pressure transducer 296 senses the manifold absolute pressure (MAP) of the engine 12 and provides an electrical signal to the control unit 270 in accordance therewith via line 282. A temperature sensor 298 senses the temperature of the oil in the fluid reservoir 64 and provides an electrical signal in accordance therewith to control unit 270 via line 284.

The control unit 270 responds to the input signals on input lines 272 - 284 according to a predetermined control algorithm as set forth herein, for controlling the energization of the fluid valve solenoid coils 246 - 256 via output lines 258 - 268. As such, the control unit 270 includes an input/output (I/O) device 300 for receiving the input signals and outputting the various pulse-width-modulation signals, and a microcomputer 302 which communicates with the I/O device 300 via an address bus 304 and a bi-directional data bus 306.

As indicated above, the present invention is directed to an improved shift pattern control. As a background, however, the base shift pattern is graphically depicted for a four-speed transmission in Figure 2a. Referring to Figure 2a, the upshift data is represented by the solid lines 1-2, 2-3 and 3-4, while the downshift data is represented by the broken lines 2-1, 3-2 and 4-3. The pairs of upshift and downshift lines divide the ranges of vehicle speed and engine throttle position into four regions corresponding to the four transmission ratios 1st, 2nd, 3rd and 4th. The separation between the respective pairs of upshift and downshift lines (3-2 and 2-3, for example) provides a degree of hysteresis between upshifts and downshifts involving a given pair of successive speed ratios.

The control unit 270 repeatedly compares measured values of vehicle speed and engine throttle position with ratio-dependent data from the table to determine the desired ratio. If the actual ratio is 1st, the control unit 270 retrieves an upshift vehicle speed Nup based on the 1-2 upshift line; if the actual ratio is 2nd, the control unit 270 retrieves a downshift vehicle speed Ndwn based on the 2-1 downshift line and an upshift vehicle speed Nup based on the 2-3 upshift line; if the actual ratio is 3rd, the control unit 270 retrieves a downshift vehicle speed Ndwn based on the 3-2 downshift line and an upshift vehicle speed Nup based on the 3-4 upshift line; and if the actual ratio is 4th, the control unit 270 retrieves a downshift vehicle speed Ndwn based on the 4-3 downshift line. In each case, an upshift is scheduled if the actual vehicle speed exceeds the upshift vehicle speed Nup, and a downshift is scheduled if the actual vehicle speed falls below the downshift vehicle speed Ndwn.

As indicated above, the base shift pattern values are empirically determined to achieve various fuel economy and performance criteria under what is considered to be "normal" road load. However, the present invention recognizes that the base shift pattern may be inappropriate for above normal road loads, and suitably modifies the base pattern in relation to a measure of the excessive road load. As a result, upshifting occurs later than indicated by the base pattern and downshifting occurs sooner than indicated by the base pattern.

The amount of excessive road load (grade load GL) is determined through an application of the load balance expression:

$$GL = Tax - Taccel - Taero - Tro$$

where Tax is the torque delivered to the drive axle of the vehicle, Taccel is the torque required to accelerate the vehicle, Taero is the torque required to overcome the aerodynamic drag of the vehicle, and Tro is the torque required to overcome the rolling resistance of the vehicle.

The acceleration torque Taccel is based on the product of a mass constant and a measure of the vehicle acceleration. The aerodynamic torque Taero is determined as a square function of vehicle speed, and the rolling torque is taken as a constant. The axle torque Tax is based on the product of the current speed ratio and an estimate of the transmission input torque Ti. The input torque Ti, in turn, is determined as a function of the engine manifold absolute pressure (MAP), the engine pumping efficiency (K), a mechanical friction term (Tf), the accessory load torque (TL), and the torque multiplication ratio (Tc) of the torque converter 24 according to the expression:

$$Ti = [(MAP * K) - Tf - TL] * Tc$$

The engine MAP is determined from the pressure transducer 296, while the efficiency K is stored based on previously determined data. The mechanical friction term Tf is determined as a function of engine speed Ne, and the load torque term TL is determined by loading indicators. The torque multiplication ratio Tc is determined as a function of the speed ratio Nt/Ne. Factors corresponding to the effects of exhaust gas recirculation (EGR) and instantaneous spark timing may also be taken into account.

Under normal road load conditions, the axle torque Tax will substantially equal the sum of the acceleration, rolling resistance and aerodynamic torques, and the excess or grade load GL will be approximately zero. However, if the effective road load increases due to trailering, grade climbing or an increase in the vehicle weight, the driver of the vehicle compensates by increasing the axle torque produced by the powertrain. This, in turn, produces an imbalance in the torque expression, resulting in a nonzero grade load term GL.

In the above-described situation, the control method of this invention operates to modify the base shift pattern in a manner to provide earlier downshifting and later upshifting, so long as the vehicle is decelerating due to the excessive load. This has the effect of increasing the axle torque as though the base shift pattern were matched to the above normal load condition.

If the vehicle is maintaining speed or accelerating during the detected excessive road load condition, the base shift pattern is assumed to be adequate. In this case, the control unit 270 inhibits further modification of the base shift pattern.

In the illustrated embodiment, the excess or grade load GL term is used to develop an offset GLhys for the measured throttle position. This operation is graphically depicted in Figure 2b, where the 3-4 upshift and 3-2 downshift lines correspond to those depicted in Figure 2a. In normal operation, the actual engine throttle position value TPSact is used to determine if upshifting or downshifting is desired. If the 3rd ratio is engaged, a 3-4 upshift will occur when the vehicle speed exceeds approximately 80.5 KPH (50 MPH), while a 3-2 downshift will occur when the vehicle speed falls below approximately 48.3 KPH (30 MPH). In other words, the upshift reference speed Nup is 80.5 KPH (50 MPH), and the downshift reference speed Ndwn is 48.3 KPH (30 MPH).

Under conditions of above normal road load, however, the sum of the measured throttle position and the grade load offset (TPS + GLhys) is used to determine the upshift and downshift speed references. Here, if the 3rd ratio is engaged, the 3-2 downshift will be initiated when the vehicle speed falls below a downshift speed reference of 56.3 KPH (35 MPH), and the 3-4 upshift will not not occur until the vehicle speed exceeds an upshift speed reference of 88.5 KPH (55 MPH). Hence, upshifting occurs later and downshifting occurs earlier, when compared to the base shift pattern of Figure 2a.

At excess loading above a predetermined level, the control method of this invention operates to further delay upshifting to a higher speed ratio in relation to the ability of the powertrain to overcome the detected road load in the upshifted speed ratio. In this case, the control unit 270 estimates the axle torque Tax(Ract +1) available in the upshifted ratio, and forms a ratio of that torque to the axle torque being developed with the current speed ratio. This ratio, referred to as the torque ratio Trat, is compared to a threshold or reference ratio TRATref. The reference ratio TRATref is based on the grade load amount GL, as indicated by the graph of Figure 3. If the torque ratio Trat is greater than the reference ratio TRATref, no upshifting is allowed; otherwise upshifting is scheduled, as described above in reference to Figure 2b.

As an example of the operation of the above-described control, consider a normally loaded vehicle as it begins to climb a grade. As the operator (or cruise control system) increases the engine throttle setting to prevent or limit the consequent droop in vehicle speed, the measured axle torque Tax will increase, unbalancing the load equation and producing a nonzero grade load indication GL. A downshift to a lower speed range might normally occur at a throttle setting of, for example, 50%. However, the nonzero grade load indication produces a nonzero offset which is applied to the measured throttle position TPS for shift pattern purposes.

Thus, the downshift instead occurs at an actual throttle setting of, for example 40%. The downshift increases the axle torque Tax and the acceleration torque Taccel substantially equally, so that the grade load indication remains substantially the same. Since the TPS offset also delays upshifting to the former speed range, operation in the lower speed range is extended for the duration of the grade. If the grade is relatively steep, upshifting is inhibited entirely unless the torque ratio exceeds the threshold TRATref.

When the grade lessens and the vehicle is no longer decelerating, further increasing of the grade load offset term GLhys is inhibited. At the same time, the measured grade load will lessen, producing a corresponding decrease in the grade load offset and increasing the likelihood of an upshift to a higher speed range.

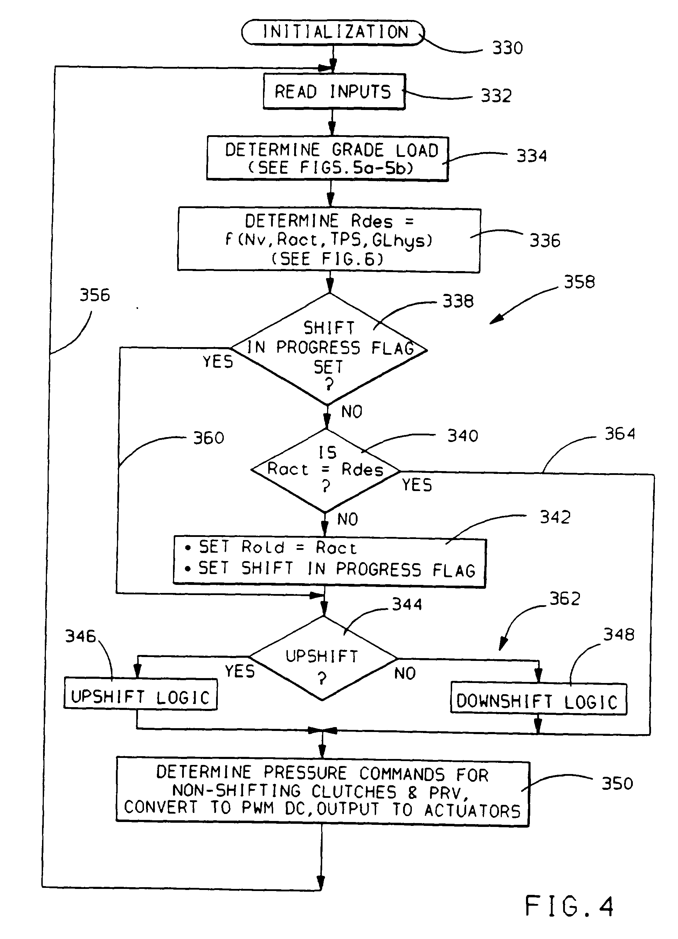

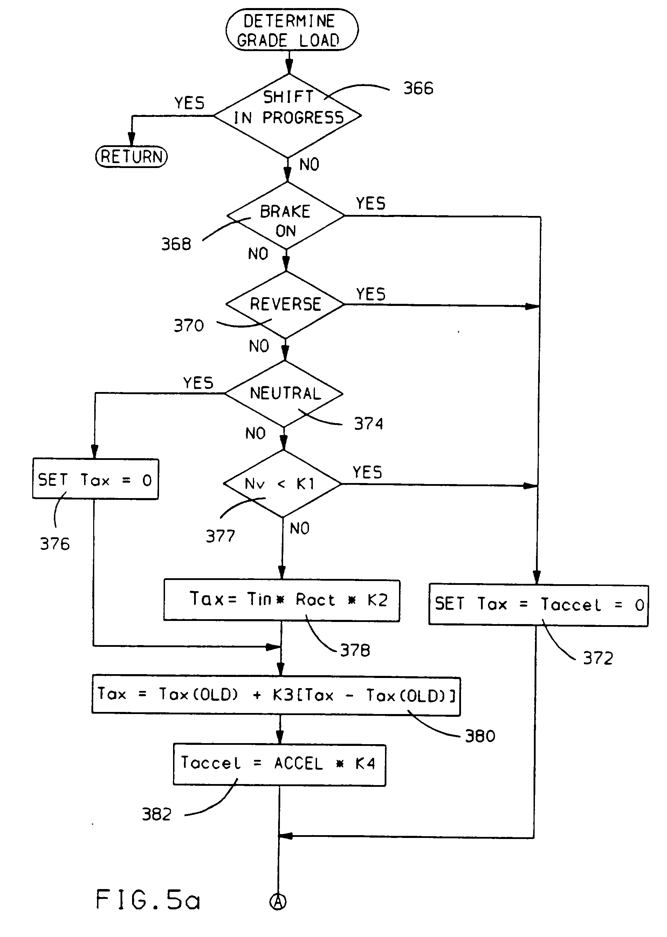

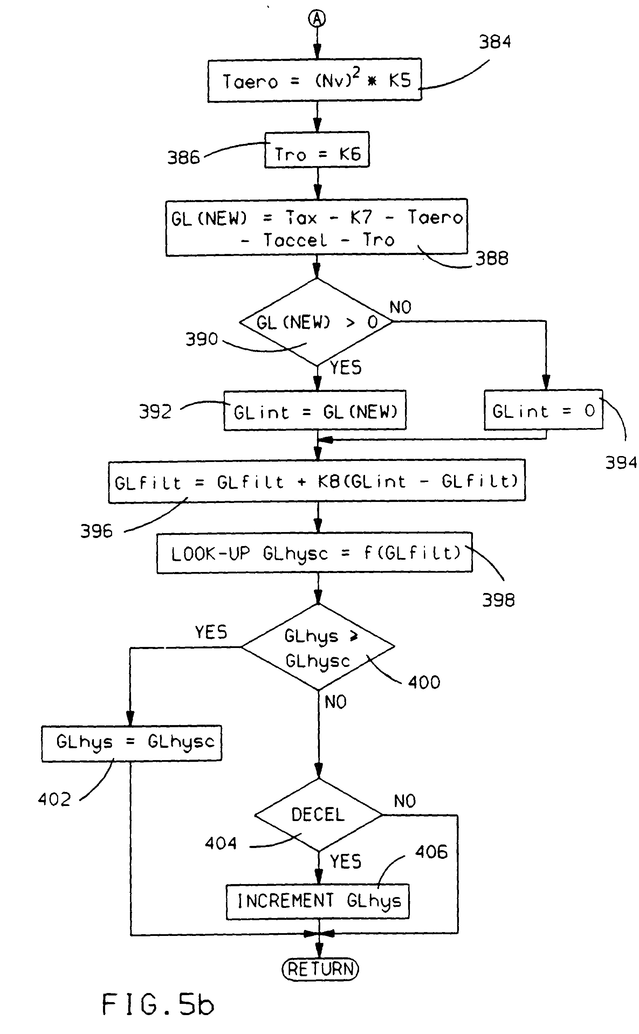

The flow diagrams of Figures 4, 5a-5b and 6 represent program instructions to be executed by the microcomputer 302 of control unit 270 in mechanizing the ratio shifting control of this invention. The flow diagram of Figure 4 represents a main or executive program which calls various subroutines for executing particular control functions as necessary. The flow diagrams of Figures 5-6 represent the functions performed by those subroutines which are pertinent to the present invention.

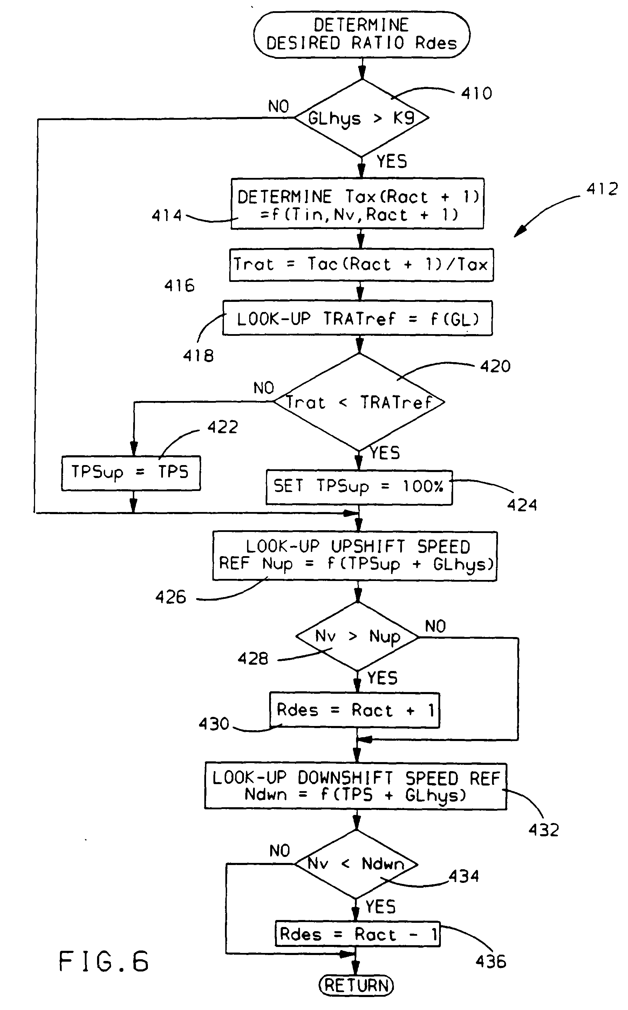

Referring to the main loop program of Figure 4, the reference numeral 330 designates a set of program instructions executed at the initiation of each period of vehicle operation for initializing the various tables, timers, etc., used in carrying out the control functions of this invention. Following such initialization, the instruction blocks 332-350 are repeatedly executed in sequence, as designated by the flow diagram lines connecting such instruction blocks and the return line 356. Instruction block 332 reads and conditions the various input signals applied to I/O device 300 via the input lines 272-284, and calculates various terms used in the control algorithms, including the input torque Ti, the torque variable Tv and the speed ratio No/Ni. The block 334 determines the value of the grade load hysteresis term GLhys, as described above, and is set forth in detail in the flow diagram of Figures 5a-5b, as indicated. Instruction block 336 determines the desired speed ratio, Rdes, in accordance with a number of inputs including present ratio Ract, throttle position TPS, vehicle speed Nv, manual valve position, and the grade load offset GLhys, if any, and is set forth in detail in the flow diagram of Figure 6, as indicated.

The blocks designated by the reference numeral 358 include the decision block 338 for determining if a shift is in progress, as indicated by the "SHIFT IN PROGRESS" flag; the decision block 340 for determining if the actual speed ratio Ract (that is, No/Nt) is equal to the desired speed ratio Rdes determined at instruction block 336; and the instruction block 342 for setting up the initial conditions for a ratio shift. The instruction block 342 is only executed when decision blocks 338 and 340 are both answered in the negative. In such case, instruction block 342 serves to set the old ratio variable (Rold) equal to Ract and to set the "SHIFT IN PROGRESS" flag. If a shift is in progress, the execution of decision blocks 340 and 342 is skipped, as indicated by the flow diagram line 360. If no shift is in progress, and the actual ratio equals the desired ratio, the execution of instruction block 342 and the blocks designated by the reference numeral 362 is skipped, as indicated by the flow diagram line 364.

The blocks designated by the reference numeral 362 include the decision block 344 for determining if the shift is an upshift or a downshift; the instruction block 346 for developing pressure commands for the on-coming and off-going clutches if the shift is an upshift; and the instruction block 348 for developing the pressure commands for the on-coming and off-going clutches if the shift is a downshift. Instruction block 350 determines pressure commands for the PRV 68 and the nonshifting clutches, converts the commands to a PWM duty cycle based on the operating characteristics of the various fluid valves, and energizes the solenoid coils accordingly.

Referring to the grade load determination flow diagram of Figures 5a-5b, the decision block 366 is first executed to determine if a shift is in progress. If so, the remainder of the routine is skipped. If the service brake is depressed or the shaft 142 is in Reverse, as determined at blocks 368 and 370, the block 372 is executed to set the axle and acceleration torque terms Tax and Taccel to zero. If the shaft 142 is in Neutral, as determined at block 374, the block 376 is executed to set the axle torque term Tax to zero. The axle and acceleration torque terms Tax and Taccel are also zeroed if the vehicle speed Nv is less than a predefined value K1, such as 32.2 KPH (20 MPH), as determined at block 377.

The blocks 378-382 determine the nonzero values of the axle and acceleration torque terms Tax and Taccel. The axle torque Tax is determined according to the expression:

$$Tax = Tin * Ract * K2$$

and then subjected to a first order lag filter, as indicated at block 380. The acceleration torque term is determined according to the expression:

$$Taccel = K4 * d(Nv)/dt$$

where K4 represents the nominal vehicle weight and $d(Nv)/dt$ represents the acceleration of the vehicle.

The aerodynamic and rolling resistance torque terms Taero and Tro are then determined at blocks 384 and 386 according to the respective expressions:

$$Taero = Nv^2 * K5, \text{ and}$$

$$Tro = K6$$

The block 388 is then executed to determine the new grade load term GL(NEW) according to the expression:

$$GL(NEW) = Tax - K7 - Taero - Taccel - Tro$$

The blocks 390-396 are then executed to develop a filtered grade load term GLfilt according to the expression:

$$GLfilt = GLfilt + K8(GLint - GLfilt)$$

where K8 is a gain constant and GLint is the instantaneous grade load for filtering purposes. As indicated at blocks 390-394, the term GLint is set equal to (1) the new grade load GL(NEW) if GL(NEW) is positive, and (2) zero if GL(NEW) is zero or negative. The block 398 is then executed to look-up a computed grade load hysteresis value GLhysc as a function of the filtered grade load GLfilt. In the illustrated embodiment, such function is substantially linear and proportional so that the hysteresis term increases with increasing grade load. The block 400-402 limit the actual grade load hysteresis term GLhys to the computed value GLhysc.

If the actual hysteresis GLhys is less than the computed value GLhysc and the vehicle is decelerating, as determined by blocks 400 and 404, the block 406 is executed to increment the actual hysteresis GLhys. If the vehicle is maintaining speed or accelerating -- that is, $d(Nv)/dt \geq 0$ -- as determined at block 404, incrementing of the hysteresis term GLhys is inhibited to prevent further modification of the base shift pattern. In other words, the actual hysteresis GLhys is updated to track both increases and decreases in the computed hysteresis GLhysc if the vehicle is decelerating, and to track only decreases in the computed hysteresis GLhysc if the vehicle is maintaining speed or accelerating.

Referring to the desired ratio determination flow diagram of Figure 6, the block 410 is first executed to determine if the grade load offset term GLhys is greater than a threshold value K9. If not, the execution of the flow diagram portion 412 is skipped, and the blocks 426-430 are executed to schedule upshifting according to the sum of TPS and GLhys, as described above in reference to Figure 2b. If the grade load hysteresis term GLhys does exceed the constant K9, the flow diagram portion 412 is executed to inhibit upshifting unless the axle torque in the upshifted speed ratio is a significant percentage of the axle torque Tax.

Referring to the flow diagram portion 412, the block 414 is first executed to determine the axle torque Tax (Ract+1) available at the current throttle setting in the upshifted speed ratio (Ract+1). To do this, the input torque Tin is computed, as described above, assuming a transmission input speed of (Nv/Ract). The blocks 416 and 418 are then executed to determine the estimated torque ratio Trat according to the quotient Tax(Ract+1)/Tax, and the reference torque ratio TRATref. As indicated above, and as shown in Figure 3, the reference torque ratio TRATref is determined as a function of the grade load GL.

If the torque ratio Trat is less than the reference torque ratio TRATref, as determined at block 420, the block 424 is executed to set the upshift throttle position term TPSup to 100% for the purpose of inhibiting further upshifting. Otherwise, the block 422 is executed to set the TPSup equal to the measured throttle position TPS, and upshifting is scheduled, as described above in reference to Figure 2b. In any event, the blocks 432-436 are then executed to schedule downshifting according to the sum of TPS and GLhys, as described above in reference to Figure 2b.

It will be appreciated that the above described control operates to variably modify the base shift pattern depending on the detected level of grade load and the ability of the powertrain to maintain or accelerate the vehicle. The determination of modifications which provide later upshifting and extended operation in a downshifted ratio compared to the base shift pattern depends on the magnitude of the detected grade load and the ability of the powertrain to maintain substantially equal axle torque in the upshifted gear. If the excess load is relatively small, the modification is determined in direct relation to the detected grade load, as with downshifts. If the excess load is relatively large, upshifting is inhibited unless the axle torque available in the upshifted speed ratio is at least a specified percentage of the current axle torque. The specified percentage, and therefore the likelihood of upshift inhibiting, increases with increasing grade load.

The above described control thus provides improved shift stability compared to the base shift pattern when the vehicle loading is excessive, regardless of the reason for the excessive load. This improves the driveability of the vehicle and also prevents excessive wear and heating of the transmission friction elements due to successive upshifting and downshifting.

## Claims

1.  A method of operation in a motor vehicle including an engine (12) connected to a drive axle (20,22) through a transmission (14) having multiple speed ratios, the method comprising the steps of initiating (336-350) upshifting or downshifting between the speed ratios in response to a comparison of measured load condition parameters (GL) with predetermined load condition parameters defined by a base shift pattern; determining (378) an axle torque value corresponding to a drive axle torque developed at the drive axle by the engine and transmission during nonshifting modes of operation; and determining (382-386) a nominal road load torque which must be overcome by the drive axle torque with normal vehicle loading; characterised by developing (390) an indication of above normal loading in relation to an amount by which the axle torque value exceeds the nominal road load torque; by modifying the measured load condition parameters by an offset amount (GLhys) in relation to the indication of above normal loading, wherein the modifying step provides earlier initiation of downshifting and later initiation of upshifting, as compared to the base shift pattern; and in that the step of initiating upshifting and downshifting includes the steps of measuring first and second vehicle parameters; modifying the first vehicle parameter by the offset amount; applying the modified vehicle parameter to the shift pattern to obtain a shift pattern parameter which must be achieved to initiate a shift; and initiating the shift when the second vehicle parameter substantially equals the shift pattern parameter.

2.  A method as claimed in Claim 1, including the step of inhibiting (404) the modification of the measured load condition parameter if the vehicle is accelerating.

3.  A method as claimed in Claim 1 or Claim 2, including the step of inhibiting (404) the modification of the measured load condition parameter if the vehicle speed is not decreasing despite the above normal loading.

4.  A method as claimed in any one of Claims 1 to 3, wherein the first vehicle parameter is a throttle position of the engine, and the second vehicle parameter is a speed of the vehicle.

5. A method as claimed in Claim 1, comprising the step of determining the offset amount in relation to the indication of above normal loading including the steps of computing an offset value in relation to the indication of above normal loading; updating the offset amount to track both increases and decreases in the computed offset value if the vehicle is decelerating; and updating the offset amount to track only decreases in the computed offset value if the vehicle is not decelerating.

6. A method as claimed in Claim 1, wherein the developing step develops an indication of the axle torque which can be developed at said drive axle in an upper speed range relative to the axle torque value if substantial above normal loading is measured; further comprising the step of inhibiting the initiation of upshifting to the upper speed range if the indication is less than a threshold value.

7. A method as claimed in Claim 6, wherein the threshold value is determined in relation to the measure of above normal loading.

**Patentansprüche**

1. Ein Verfahren des Betriebs in einem Motorfahrzeug mit einem Motor (12), der mit einer Antriebsachse (20, 22) durch eine Transmission (14) mit multiplen Geschwindigkeitsverhältnissen verbunden ist, wobei das Verfahren die Schritte umfaßt, daß Aufwärtsschaltungen oder Abwärtsschaltungen zwischen den Geschwindigkeitsverhältnissen im Ansprechen auf einen Vergleich von gemessenen Lastzustandsparametern (GL) mit vorbestimmten Lastzustandsparametern ausgelöst werden (336-350), die durch ein Basisschaltmuster definiert sind; ein Achsendrehmomentwert entsprechend einem Antriebsachsendrehmoment, das bei der Antriebsachse durch den Motor und die Transmission während nichtschaltender Betriebsmoden entwickelt wird, bestimmt wird (378); und ein nominelles Straßenlastdrehmoment bestimmt wird (382-386), welches von dem Antriebsachsendrehmoment bei normaler Fahrzeugbelastung überwunden werden muß;
dadurch gekennzeichnet, daß ein Hinweis auf Belastung oberhalb normal in Relation zu einem Maß entwickelt wird (390), um welches das Achsendrehmoment das nominelle Straßenlastdrehmoment überschreitet; daß die gemessenen Straßenlastzustandsparameter um eine Versatzgröße (GLhys) in Relation zu dem Hinweis auf Belastung oberhalb normal modifiziert werden, worin der Modifizierungsschritt früheres Auslösen von Abwärtsschaltung und späteres Auslösen von Aufwärtsschaltung verglichen zu dem Basisschaltmuster vorsieht; und dadurch, daß der Schritt, daß Aufwärtsschaltung und Abwärtsschaltung ausgelöst wird, die Schritte umfaßt, daß erste und zweite Fahrzeugparameter gemessen werden; der erste Fahrzeugparameter durch die Versatzgröße modifiziert wird; der modifizierte Fahrzeugparameter an das Schaltmuster angelegt wird, um einen Schaltmusterparameter zu erhalten, welcher erreicht werden muß, um eine Schaltung auszulösen; und die Schaltung ausgelöst wird, wenn der zweite Fahrzeugparameter dem Schaltmusterparameter im wesentlichen gleich ist.

2. Ein Verfahren nach Anspruch 1, das den Schritt umfaßt, daß die Modifikation des gemessenen Lastzustandparameters gehemmt wird (404), wenn das Fahrzeug beschleunigt.

3. Ein Verfahren nach Anspruch 1 oder Anspruch 2, das den Schritt umfaßt, daß die Modifikation des gemessenen Lastzustandparameters gehemmt wird (404), wenn die Fahrzeuggeschwindigkeit trotz der Belastung oberhalb normal nicht abnimmt.

4. Ein Verfahren nach einem der Ansprüche 1 bis 3, worin der erste Fahrzeugparameter eine Drosselposition des Motors ist und der zweite Parameter eine Geschwindigkeit des Fahrzeugs ist.

5. Ein Verfahren nach Anspruch 1, das den Schritt umfaßt, daß die Versatzgröße in Relation zu dem Hinweis auf Belastung oberhalb normal bestimmt wird, einschließlich der Schritte, daß ein Versatzwert in Relation zu dem Hinweis auf Belastung oberhalb normal berechnet wird; die Versatzgröße aktualisiert wird, um sowohl Zunahmen als auch Abnahmen des berechneten Versatzwertes zu folgen, wenn das Fahrzeug verzögert; und die Versatzgröße aktualisiert wird, um nur Abnahmen des berechneten Versatzwertes zu folgen, wenn das Fahrzeug nicht verzögert.

6. Ein Verfahren nach Anspruch 1, worin der Entwicklungsschritt einen Hinweis auf das Achsendrehmoment entwickelt, welches bei der Antriebsachse in einem oberen Geschwindigkeitsbereich entwickelt werden kann, relativ zu dem Achsendrehmomentwert, wenn Belastung wesentlich oberhalb normal gemessen wird; das weiter den Schritt umfaßt, daß die Auslösung des Hochschaltens zu dem oberen Geschwindigkeitsbereich gehemmt wird, wenn der Hinweis kleiner als ein Schwellwert ist.

7. Ein Verfahren nach Anspruch 6, worin der Schwellwert in Relation zu dem Maß der Belastung oberhalb normal bestimmt wird.

## Revendications

1. Procédé de fonctionnement sur un véhicule automobile comprenant un moteur (12) relié à un arbre moteur (20, 22) par l'intermédiaire d'une boîte de vitesse (14) ayant des rapports de vitesse multiples, le procédé comprenant les étapes consistant à :

   - amorcer (336 à 350) un changement de vitesse vers le haut ou un changement de vitesse vers le bas entre les rapports de vitesse en réponse à une comparaison de paramètres mesurés de l'état de charge (GL) avec des paramètres prédéterminés de l'état de charge définis à l'aide d'une grille de changement de vitesse de base,
   - déterminer (378) une valeur du couple d'arbre correspondant à un couple de l'arbre moteur développé au niveau de l'arbre moteur par le moteur et la boîte de vitesse au cours des modes opératoires sans changement de vitesse, et
   - déterminer (382 à 386) un couple nominal de résistance au roulement normal qui doit être surmonté par le couple de l'arbre moteur avec une charge normale du véhicule ;
   caractérisé en ce qu'il comprend les étapes consistant à :
   - développer (390) une indication de charge supérieure à la normale par rapport à une quantité dont la valeur du couple de l'arbre dépasse le couple nominal de résistance au roulement normal,
   - modifier les paramètres mesurés de l'état de charge d'une quantité décalée (GLhys) par rapport à l'indication de charge supérieure à la normale, dans lequel l'étape de modification assure l'amorçage anticipé du changement de vitesse vers le bas et l'amorçage retardé du changement de vitesse vers le haut, par rapport à la grille de changement de vitesse de base,
   - et en ce que l'étape d'amorçage du changement de vitesse vers le haut et du changement de vitesse vers le bas comprend les étapes consistant à :
   - mesurer des premier et second paramètres du véhicule,
   - modifier le premier paramètre du véhicule de la quantité décalée,
   - appliquer le paramètre modifié du véhicule à la grille de changement de vitesse afin d'obtenir un paramètre de la grille de changement de vitesse qui doit être atteint pour amorcer un changement de vitesse, et
   - amorcer le changement de vitesse lorsque le second paramètre du véhicule égale sensiblement le paramètre de la grille de changement de vitesse.

2. Procédé selon la revendication 1, comprenant l'étape consistant à empêcher (404) la modification du paramètre mesuré de l'état de charge si le véhicule est en train d'accélérer.

3. Procédé selon la revendication 1 ou la revendication 2, comprenant l'étape consistant à empêcher (404) la modification du paramètre mesuré de l'état de charge si la vitesse du véhicule ne diminue pas malgré la charge supérieure à la normale.

4. Procédé selon l'une quelconque des revendications 1 à 3, dans lequel le premier paramètre du véhicule est une position de la charge du moteur, et le second paramètre du véhicule est une vitesse du véhicule.

5. Procédé selon la revendication 1, comprenant l'étape consistant à déterminer la quantité décalée par rapport à l'indication de charge supérieure à la normale comprenant les étapes consistant à:

   - calculer une valeur décalée par rapport à l'indication de charge supérieure à la normale,
   - remettre à jour la quantité décalée pour suivre à la fois les accroissements et décroissements de la valeur décalée calculée si le véhicule est en train de décélérer, et
   - remettre à jour la quantité décalée pour suivre seulement les décroissements de la valeur décalée calculée si le véhicule n'est pas en train de décélérer.

6. Procédé selon la revendication 1, dans lequel l'étape de développement consiste à développer une indication du couple de l'essieu qui peut être développée au niveau dudit essieu moteur dans une gamme de vitesse supérieure par rapport à la valeur de couple de l'essieu si une charge importante supérieure à la normale est mesurée, comprenant en outre l'étape consistant à empêcher l'amorçage du changement de vitesse vers le haut dans la gamme de vitesse supérieure si l'indication est inférieure à une valeur de seuil.

7. Procédé selon la revendication 6, dans lequel la valeur de seuil est déterminée par rapport à la mesure de charge supérieure à la normale.

FIG.1a

EP 0 512 596 B1

FIG.1b

EP 0 512 596 B1

12

FIG. 2a

VEHICLE SPEED Nv (KPH)

FIG. 2b

VEHICLE SPEED Nv (KPH)

FIG. 3

GRADE LOAD GL

INITIALIZATION — 330

READ INPUTS — 332

DETERMINE GRADE LOAD
(SEE FIGS. 5a-5b) — 334

DETERMINE Rdes =
f(Nv, Ract, TPS, GLhys)
(SEE FIG. 6) — 336

356

358

SHIFT
IN PROGRESS FLAG
SET
? — 338

YES

NO

360

IS
Ract = Rdes
? — 340

YES

364

NO

• SET Rold = Ract
• SET SHIFT IN PROGRESS FLAG — 342

344

362

346

UPSHIFT
? 

YES

NO

348

UPSHIFT LOGIC

DOWNSHIFT LOGIC

DETERMINE PRESSURE COMMANDS FOR
NON-SHIFTING CLUTCHES & PRV,
CONVERT TO PWM DC, OUTPUT TO ACTUATORS — 350

FIG. 4

14

```
        ╭─────────────╮
        │  DETERMINE  │
        │ GRADE LOAD  │
        ╰──────┬──────╯
               │
              ╱ ╲
    YES      ╱   ╲        SHIFT         366
  ◄─────────◄ IN PROGRESS ►────────
             ╲   ╱
  ╭────────╮  ╲ ╱
  │ RETURN │   │ NO
  ╰────────╯   │
              ╱ ╲
             ╱   ╲    BRAKE         YES
  368       ◄ ON  ►──────────────────────────────────┐
             ╲   ╱                                    │
              ╲ ╱                                     │
               │ NO                                   │
              ╱ ╲                                     │
             ╱   ╲   REVERSE       YES                │
  370       ◄     ►──────────────────────────────►   │
             ╲   ╱                                    │
              ╲ ╱                                     │
               │ NO                                   │
    YES       ╱ ╲                                     │
  ◄──────────◄   ╲  NEUTRAL                           │
  │          ╲   ╱    374                             │
  │           ╲ ╱                                     │
  │            │ NO                                   │
  │           ╱ ╲                                     │
  │          ╱   ╲  Nv < K1       YES                 │
  │         ◄      ►───────────────────────────►     │
  │          ╲   ╱                                    │
  │      377  ╲ ╱   NO                                │
  │            │                                      │
╭──────────╮   │                                      │
│ SET Tax=0│   ▼                               ╭──────────────────────╮
╰────┬─────╯  ╭────────────────────────╮       │ SET Tax = Taccel = 0 │
     │        │ Tax= Tin * Ract * K2    │       ╰──────────┬───────────╯
 376 │        ╰────────────┬───────────╯                   │
     │                 378 │                           372  │
     └─────────────────────►                                │
                           │                                │
              ╭────────────────────────────────────────╮    │
              │ Tax = Tax(OLD) + K3[Tax - Tax(OLD)]     │    │
              ╰────────────────────┬───────────────────╯    │
                               380 │                         │
                      ╭────────────────────────╮             │
                      │ Taccel = ACCEL * K4     │            │
                      ╰────────────┬───────────╯             │
                  382              │                         │
                                   ▼◄────────────────────────┘
                                  (A)
```

FIG.5a

Ⓐ

$$Taero = (Nv)^2 * K5$$  — 384

$$Tro = K6$$  — 386

$$GL(NEW) = Tax - K7 - Taero - Taccel - Tro$$  — 388

GL(NEW) > 0  — 390

NO → GLint = 0  — 394

YES

GLint = GL(NEW)  — 392

$$GLfilt = GLfilt + K8(GLint - GLfilt)$$  — 396

LOOK-UP GLhysc = f(GLfilt)  — 398

GLhys > GLhysc  — 400

YES → GLhys = GLhysc  — 402

NO

DECEL  — 404

NO

YES → INCREMENT GLhys  — 406

RETURN

F I G . 5b

FIG.6